# EUROPEAN PATENT APPLICATION

(11) **EP 2 284 388 A1**
(43) Date of publication of application: **16.02.2011**
(21) Application number: 10171885.6
(22) Date of filing: 04.08.2010
(51) Int. Cl.: F03D 1/06, B29C 63/02

(54) **Protecting film for blade of wind power generator**

(30) Priority: 06.08.2009 US 231788 P
(71) Applicant: Nitto Denko Corporation, Ibaraki-shi Osaka 567-8680 (JP)
(72) Inventor: Watanabe, Hiroyuki, Ibaraki-shi Osaka 567-8680 (JP); Tamai, Hironori, Ibaraki-shi Osaka 567-8680 (JP); Okeyui, Takuji, Ibaraki-shi Osaka 567-8680 (JP)
(74) Representative: Grünecker, Kinkeldey, Stockmair & Schwanhäusser Anwaltssozietät

(57) **Abstract**

The present invention provides a protection film for blades to be adhered to the blade surface of wind power generators, which has a substrate and a pressure-sensitive adhesive layer on one surface of the substrate.

## Description

### TECHNICAL FIELD OF THE INVENTION

The present invention relates to a blade of a wind power generator, which is protected by a protection film having a pressure-sensitive adhesive layer, the protection film, and a wind power generator having such blade.

### BACKGROUND OF THE INVENTION

Wings of a wind power generator (hereinafter to be referred to as blade) rotate in the flow of air, which is a fluid, and convert the energy of rotation to electricity. For efficient rotation on receipt of the flow of a fluid, it is important to reduce blade weight to decrease the inertial force. In addition, since many of the blades for wind power generators exceed 50 m in full length, weight reduction of the blades leads to the downsizing and light weight of the generator itself. For efficient conversion of the fluid flow to the rotational movement of the blades, moreover, an appropriate design of a blade shape and maintenance of the shape, as well as smoothness of the surface and maintenance thereof are required.
As blade materials, light weight metal materials such as aluminum, titanium and the like have been used. Recently, to meet the requirements of further reduction of weight and high-rigidification, a fiber reinforced resin (hereinafter to be referred to as FRP), which is lighter than metals and highly strong and highly rigid, has been used. Particularly, FRP is mainly used for large wind power generators.
Once installed, such wind power generators are desired to continuously function without the need of repair. They are checked every five years at most. However, wind power generators are often installed on the land with severe climate. In deserts and the like, for example, the temperature dramatically changes between cold and warmth, strong sunlight irradiates, and sandstorm hits sometimes. Near the coast, moreover, wind power generators are affected by wind and rain, as well as salt water, and hit by insects and wild birds. In volcanic regions, they are affected by corrosive gas, or even by volcanic ash.
Since blades are constantly exposed to such severe natural environments, a long-term use causes inconveniences such as breakage, deformation, surface dirt, surface detachment and the like. When such inconveniences occur, power conversion efficiency decreases, and the problem of defective appearance also arises. Nevertheless, since the blades for wind power generation are huge, they cannot be repaired easily.
To protect the blades, attachment of a cleaning device to a windmill has been proposed (patent document 1), and prevention of surface dirt by directly forming a titanium oxide powder fixed layer or a photocatalyst coating layer on the surface of the blade has been proposed (patent document 2).

### [prior art]

### [patent document]

patent document 1: JP-A-2002-115646
patent document 2: JP-A-2007-120393

### [SUMMARY OF THE INVENTION]

### Problems to be Solved by the Invention

However, conventional methods include provision of a specific mechanism in the blade or direct treatment of the blade surface, where the mechanism and treatment themselves require maintenance over time. In addition, they are ineffective for damages caused by striking of sand, collision of insects, birds and the like, and the maintenance in the installation site is not easy.

### Means of Solving the Problems

The present invention solves such problems, and relates to the protection of blades of wind power generators by adhering a protection film on the blade surface.

Accordingly, the present invention provides the following.
[1] A protection film for a blade of a wind power generator, comprising a substrate and a pressure-sensitive adhesive layer on one surface of the substrate, which is used by adhering onto a blade surface.
[2] The protection film of the above-mentioned [1], wherein the substrate is a weather-resistant film.
[3] The protection film of the above-mentioned [2], wherein the weather-resistant film is selected from the group consisting of a polyolefin based film, a polyester based film, a urethane based polymer film, a composite film comprising an acrylic polymer and a urethane polymer, and a fluorine based film.
[4] The protection film of any of the above-mentioned [1] to [3], wherein a pressure-sensitive adhesive constituting the pressure-sensitive adhesive layer is an acrylic pressure-sensitive adhesive.
[5] The protection film of any of the above-mentioned [1] to [4], wherein the pressure-sensitive adhesive layer is a foam-containing pressure-sensitive adhesive layer.
[6] A method of protecting a blade of a wind power generator, comprising adhering the protection film of any of the above-mentioned [1] to [5] onto a blade surface.
[7] A blade for a wind power generator, having a surface covered with a protection film.
[8] The blade of the above-mentioned [7], wherein the protection film comprises a substrate comprised of a weather resistant film, and a pressure-sensitive adhesive layer formed on one surface of the substrate.
[9] The blade of the above-mentioned [8], wherein the pressure-sensitive adhesive layer is comprised of an acrylic pressure-sensitive adhesive.
[10] The blade of the above-mentioned [8] or [9], wherein the pressure-sensitive adhesive layer is a foam-containing pressure-sensitive adhesive layer.
[11] A wind power generator, having the blade of any of the above-mentioned [7] to [10].

### Effect of the Invention

An effect of one embodiment of the present invention is improved durability of the blade itself, since the degradation of the blade itself made of FRP can be suppressed by the adhesion of a protection film.
An effect of another embodiment of the present invention is maintenance of appearance and prolonged lifetime of the blade, which is achieved by adhering, to the blade, a protection film having a surface exhibiting a dirt-preventive effect such as by a fluorine treatment.
An effect of still another embodiment of the present invention is facilitated repair of a blade even in the installation site, since a protection film of the dirty or damaged part(s) alone needs to be changed.
An effect of yet another embodiment of the present invention is good adhesiveness of a pressure-sensitive adhesive layer to a curved surface or uneven surface (including broken part upon repair) of a blade and good repulsion resistance of the protection film, which are achieved by the presence of foams in the pressure-sensitive adhesive layer.
An effect of other embodiment of the present invention is possible selection of a protection film and a surface treatment suitable for the installation site of the wind power generator, without changing the structure and materials of the blade itself.

### [Mode of Embodiment of the Invention]

The protection film to be adhered to a blade of a wind power generator in the present invention (hereinafter to be referred to as a protection film) comprises at least a film-shaped or sheet-shaped substrate (hereinafter to be referred to as a substrate), and a pressure-sensitive adhesive layer formed thereon. A film in the context of the present invention embraces a sheet. Therefore, a film is a broad concept including a continuous form, a roll of a continuous product, a leaf form, a thick film and a thin film. In addition, a substrate is a concept including a single film mentioned above, and the film having a surface-treated layer formed thereon.
The substrate and the pressure-sensitive adhesive layer can be combined variously. In addition, when, for example, a given shape or conductive material needs to be provided on the blade surface as measures for lightning, processing of the blade body made of FRP and the like is not easy because of its large area. Once processed, moreover, modification and repair is not easy. In contrast, utilizing the protection film, a substance having a given shape may be fixed on a surface of the substrate in advance, and the protection film can be adhered on the blade surface to cover the substance. Since a shape or pattern required on the blade can be formed by coloring, a surface treatment or surface processing of the protection film itself, the degree of freedom of design increases, and repair is easy.

The form of the protection film of the present invention is not particularly limited. The film is provided in various forms according to an adhesion method permitting smooth adhesion to a blade with a large area without taking many steps. For example, it can also be provided in a roll of a film with a given width. In addition, it can also be provided in a sheet shape (leaf shape) cut in advance into a shape suitable for adhesion to a blade. A sheet-shaped (leaf-shaped) protection film is suitable for continuously covering a large area. Moreover, a protection sheet film is suitable for selectively replacing, when repairing, a dirty part, a discolored part and an abraded part. When a protection film is colored variously, a decoration effect can also be imparted to the blade.

One of the effects obtained by providing a protection film is protection of the surface of the blade body with a film. To be specific, when a protection film is detached after a long-term use, a blade body surface free of deterioration appears. Therefore, the use of a new blade body surface begins from the time point of film detachment, which is effective for extending the lifetime of the blade.
On the other hand, the protection film of the present invention may be used as a repairing film. In this case, a protection film only needs to be adhered to the whole or partial surface of the blade body that became dirty by a long-term use.

An embodiment of the protection film may be a protection film having a laminate structure. An example of a two-layer constitution includes adhering a first protection film to a blade surface via a pressure-sensitive adhesive layer, and laminating a second protection film thereon. As a method for laminating the first protection film and the second protection film, for example, a coextrusion molding method can be employed. A protection film having such a multi-layer constitution is effective for repairing and extension of lifetime, since undeteriorated surface of the first protection film appears merely by detaching the outermost second protection film.

To deal with the increasing demand for wind power generation, various blades have been proposed. For example, JP-A-2005-299620 proposes an assembled blade. In the case of such assembled blade, protection and reinforcement of jointing parts becomes an important factor to determine reliability of the blade. By adhering the protection film for blades of the present invention to cover the jointing part, penetration of water, dust, sand or gas from the jointing part can be prevented, as well as the reinforcing role of the jointing part can also be exhibited.

One embodiment of the protection film of the present invention is a film having a substrate comprised of a weather resistant film also having water resistance, and a pressure-sensitive adhesive layer having high durability, high heat resistance and strong adhesive force, wherein the substrate has been subjected to a dirt-preventing treatment. The dirt-preventing treatment of the substrate includes a film having a dirt-preventing ability. In this case and when the substrate is flexible, a film or sheet having a large area can be easily adhered even to a deformed part or a corner part of a blade surface. However, the flexibility of the substrate is not an essential factor. Even a film of the present invention having poor flexibility etc. can be adhered to a flat surface, and a film of the present invention in a sheet form having a small area can be adhered even to a deformed part or a corner part of a blade surface.

In the present invention, the weather resistant film is not particularly limited as long as it can be used (can maintain blade-protecting function) as a protection film for blades for a long time (for example, not less than two years, preferably not less than five years, more preferably about ten years). For example, various plastic films such as a composite film of a polyolefin based film, a polyester based film, a fluorine based film, a urethane based polymer film or a composite film containing an acrylic polymer and a urethane polymer and the like can be mentioned. More preferably used include a film containing an anti-aging agent, a UV absorber, a chemically inactive pigment or the like, or a laminated film of a heterologous or homogeneous plastic, a laminated film of a plastic film and a metal foil, a film formed by vapor-depositing a metal on a plastic film, and the like.

A protection film having a weather resistant film and a pressure-sensitive adhesive layer is explained below as embodiments of the present invention. Note that the present invention is not limited to the following embodiments, but encompasses various embodiments based on the concept of the present invention.

One embodiment of the protection film of the present invention is a film having a substrate comprised of a highly durable film surface-treated to have a dirt-preventing effect, or a film made of a material having a dirt-preventing effect, which substrate is adhered to a blade surface via a pressure-sensitive adhesive layer.

Examples of the high-durable film include, as a film withstanding outdoors in long-term use, a polyolefin based film such as a polypropylene homopolymer, a polypropylene random polymer, a polyester based film such as a poly(ethylene terephthalate) (PET) film, a urethane based polymer film, a composite film containing an acrylic polymer and a urethane polymer, or a fluorine based film.

### (Polyolefin based film)

Polyolefin based films are comprised of polyolefin based thermoplastic resins. Examples of the polyolefin based thermoplastic resin include one comprising, as a main component, a polymer containing an α-olefin having a carbon number of 4 - 12, a polyethylene based resin, a polypropylene based resin, an ethylenevinyl acetate copolymer and the like.

Specific examples include a polyolefin film such as an olefin polymer such as low density polyethylene, linear low density polyethylene, polypropylene, poly-1-butene, poly-4-methyl-1-pentene, an ethylene propylene copolymer, an ethylene 1-butene copolymer, an ethylene 1-hexene copolymer, an ethylene 4-methyl-1-pentene copolymer, an ethylene 1-octene copolymer, an ethylene propylene butene copolymer, an ethylene methyl acrylate copolymer, an ethylene methyl methacrylate copolymer, an ethylene vinyl acetate copolymer, an ethylene ethyl acrylate copolymer, an ethylene vinyl alcohol copolymer, polyvinyl chloride, polyvinyldene chloride and the like.

### (Polyester based film)

Examples of the polyester based film include poly(ethylene terephthalate) (PET) film, poly(butylene terephthalate) (PBT) film and the like.

### (Urethane based polymer film)

Examples of the urethane based polymer film include a film comprised of various urethane based polymers having urethane bonds in the main chains thereof, which are obtained by reacting diisocyanates with diols or diamines.

### (Fluorine based film)

Examples of the fluorine based film include a film comprised of polytetrafluoroethylene (PTFE), a copolymer of tetrafluoroethylene and perfluoroalkylvinyl ether (PFA), a copolymer of tetrafluoroethylene and hexafluoropropylene (FEP), polychlorotrifluoroethylene (PCTFE), a copolymer of tetrafluoroethylene and ethylene (ETFE), polyvinyl idene fluoride (PVdF), polyvinyl fluoride (PVF) or the like.

### (Composite film)

A composite film containing an acrylic polymer and a urethane polymer simultaneously achieves high strength and high elongation at break, and shows flexibility on a curved surface and water resistance. Such composite film can be used for various parts such as a flat surface, a bent surface, a corner part and the like of a blade.

### (Acrylic polymer for composite film)

An acrylic polymer contained in a composite film is preferably obtained by using an acrylic component containing at least a (meth)acrylic acid series monomer, and a monofunctional (meth)acrylic monomer having a glass transition temperature (Tg) of homopolymer of not less than 0°C. The aforementioned acrylic component more preferably further contains a monofunctional (meth)acrylic monomer having a glass transition temperature (Tg) of homopolymer of less than 0°C.

In a composite film, a (meth)acrylic acid series monomer is a (meth)acrylic monomer having a carboxyl group, and examples thereof include acrylic acid, methacrylic acid, maleic acid, crotonic acid and the like. Among these, acrylic acid is particularly preferable. The content of the (meth)acrylic acid series monomer in the acrylic component is not less than 1 wt% and not more than 15 wt%, preferably not less than 2 wt% and not more than 10 wt%. When the content of the (meth)acrylic acid series monomer is less than 1 wt%, problems sometimes occur in that the reaction requires a long time, film forming is extremely difficult and film strength is not sufficient. When the content of the (meth)acrylic acid series monomer exceeds 15 wt%, water absorption rate of the film may become too high to cause problems of water resistance. In the present invention, the (meth)acrylic acid series monomer has a great influence on the compatibility with a urethane component and an acrylic component, and is an essential component having an extremely important function.

In the composite film, examples of the monofunctional (meth)acrylic monomer having a Tg of not less than 0°C include acryloyl morpholine, isobornyl acrylate, dicyclopentanyl acrylate, tert-butyl acrylate, cyclohexyl acrylate, lauryl acrylate and the like. These may be used alone or two or more kinds thereof may be used in combination.

As the monofunctional (meth)acrylic monomer having a Tg of not less than 0°C in the composite film, at least one from the group consisting of acryloyl morpholine, isobornyl acrylate and dicyclopentanyl acrylate is more preferably used, acryloyl morpholine and/or isobornyl acrylate, or acryloyl morpholine and/or dicyclopentanyl acrylate is further preferably used, and isobornyl acrylate is particularly preferably used.

The content of the monofunctional (meth)acrylic monomer having a Tg of not less than 0°C is preferably not less than 20 wt% and not more than 99 wt%, more preferably not less than 30 wt% and not more than 98 wt%, of an acrylic component. When the content of the monofunctional (meth)acrylic monomer is less than 20 wt%, problems of insufficient strength of the film may occur, and when it exceeds 99 wt%, the film shows too enhanced rigidity and becomes brittle.

In the composite film, examples of the monofunctional (meth)acrylic monomer having a Tg of less than 0°C include n-butyl acrylate, 2-ethylhexyl acrylate, isooctyl acrylate, isobutyl acrylate, 2-methoxyethyl acrylate, tetrahydrofurfuryl acrylate, phenoxyethyl acrylate, ethoxyethyl acrylate, 3-methoxybutyl acrylate and the like. These may be used alone or two or more kinds thereof may be used in combination.

In the composite film, n-butyl acrylate is particularly preferably used as the monofunctional (meth)acrylic monomer having a Tg of less than 0°C.
The monofunctional (meth)acrylic monomer having a Tg of less than 0°C may not be contained (content of 0 wt%). The content thereof when contained is preferably more than 0 wt% and not more than 50 wt%, more preferably more than 0 wt% and not more than 45 wt%, of the acrylic component. When the content of the monofunctional (meth)acrylic monomer exceeds 50 wt%, a problem of in sufficient film strength may occur.

The kind, combination, amount to be used and the like of (meth)acrylic monomer are appropriately determined in consideration of compatibility with urethane, polymerizability of photo-curing by radiation and the like, and property of the obtained high molecular weight substance.

In the composite film, monomers such as vinyl acetate, vinyl propionate, styrene, acrylamide, methacrylamide, a monoester or diester of maleic acid and a derivative thereof, N-methylol acrylamide, glycidyl acrylate, glycidyl methacrylate, N,N-dimethylaminoethyl acrylate, N,N-dimethylaminopropylmethacrylamide, 2-hydroxypropyl acrylate, N,N-dimethylacrylamide, N,N-diethylacrylamide, imide acrylate, N-vinylpyrrolidone, oligoester acrylate, ε-caprolactone acrylate, dicyclopentanyl (meth)acrylate, dicyclopentenyl (meth)acrylate, methoxylated cyclododecatriene acrylate, methoxyethyl acrylate may be copolymerized together with the above-mentioned (meth)acrylic monomer. The kind and amount to be used of monomers to be copolymerized are appropriately determined in consideration of the property and the like of the composite film.

Other multifunctional monomer can also be added as long as the properties are not impaired. Examples of the multifunctional monomer include ethylene glycol di(meth)acrylate, propylene glycol di(meth)acrylate, hexanediol di(meth)acrylate, neopentylglycol di(meth)acrylate, trimethylolpropane tri(meth)acrylate, pentaerythritol tri(meth)acrylate, dipentaerythritol hexa(meth)acrylate, urethane acrylate, epoxy acrylate, polyester acrylate and the like. Particularly preferred is trimethylolpropane tri(meth)acrylate.

A multifunctional monomer may be contained in not less than 1 part by weight and not more than 20 parts by weight, per 100 parts by weight of the (meth)acrylic monomer. When the content of the multifunctional monomer is not less than 1 part by weight, a composite film has sufficient cohesion strength, and when it is not more than 20 parts by weight, the elastic modulus does not become too enhanced, and the film can follow the convexes and concaves on the adherend surface.

### (Urethane polymer for composite film)

A urethane polymer can be obtained by reacting diol with diisocyanate. While a catalyst is generally used for the reaction of a hydroxyl group of diol with isocyanate, the reaction may be performed without using a catalyst providing an environment load, such as dibutyl tin dilaurate, tin octanoate.

### (Polyol for urethane polymer)

Examples of the low molecular weight diol include divalent alcohols such as ethylene glycol, diethylene glycol, propylene glycol, butylene glycol, hexamethylene glycol and the like.

Examples of the high molecular weight diol include polyether polyol obtained by addition polymerizing ethylene oxide, propylene oxide, tetrahydrofuran or the like, polyester polyol comprised of a polycondensate of alcohol such as aforementioned divalent alcohols, 1,4-butanediol, 1,6-hexanediol and dibasic acid such as adipic acid, azelaic acid, sebacic acid, and acrylic polyol, carbonate polyol, epoxy polyol, caprolactone polyol and the like. Among these, for example, polyoxytetramethylene glycol (PTMG), polyalkylene carbonate diol (PCD) and the like are preferably used.

Examples of the acrylic polyol include a homopolymer or copolymer of a hydroxyl group-containing eth)acrylic monomer, as well as a copolymer of a hydroxyl group-containing substance and a (meth)acrylic monomer, and the like. Epoxy polyol is, for example, amine-denatured epoxy resin or the like.

In the composite film, the above-mentioned diols may be used alone or two or more kinds thereof may be used in combination in consideration of dissolution in (meth)acrylic monomer, reactivity with isocyanate and the like. When the strength is required, an increased amount of the amount of a urethane hard-segment formed from a low molecular weight diol is effective. When elongation is important, diol having a high molecular weight is preferably used alone. Polyether polyol is generally economical and has good water resistance, and polyester polyol has high strength. In the present invention, the kind and amount of polyol can be freely selected according to the application and object, and the kind, molecular weight and amount to be used of polyol can also be appropriately select from the aspects of property of substrate and the like to be coated with, reactivity with isocyanate, compatibility with acrylic component and the like.

### (Diisocyanate for urethane polymer)

Examples of diisocyanate include aromatic, aliphatic and alicyclic diisocyanates, and dimer, trimer and the like of the diisocyanates. Examples of the aromatic, aliphatic and alicyclic diisocyanates include tolylene diisocyanate (TDI), diphenylmethane diisocyanate (MDI), xylylene diisocyanate (XDI), naphthylene diisocyanate (NDI), phenylene diisocyanate (PPDI), m-tetramethylxylylene diisocyanate (TMXDI), methylcyclohexane diisocyanate (hydrogenated TDI), dicyclohexylmethane diisocyanate (hydrogenated MDI), cyclohexane diisocyanate (hydrogenated PPDI), bis(isocyanatomethyl)cyclohexane (hydrogenated XDI), norbornane diisocyanate (NBDI), isophorone diisocyanate (IPDI), hexamethylene diisocyanate (HDI), butane diisocyanate, 2,4-trimethylhexamethylene diisocyanate, 2,4,4-trimethylhexamethylene diisocyanate and the like. In addition, dimers, trimers and polyphenylmethane diisocyanates thereof are used. Examples of the trimer include isocyanurate type, burette type, allophanate type and the like, which can be used as appropriate.

Among these, an aliphatic or alicyclic diisocyanate such as methylcyclohexane diisocyanate (hydrogenated TDI), dicyclohexylmethane diisocyanate (hydrogenated MDI), cyclohexane diisocyanate (hydrogenated PPDI), bis(isocyanatomethyl)cyclohexane (hydrogenated XDI), norbornane diisocyanate (NBDI), isophorone diisocyanate (IPDI), hexamethylene diisocyanate (HDI), butane diisocyanate, 2,4-trimethylhexamethylene diisocyanate, 2,4,4-trimethylhexamethylene diisocyanate are particularly preferably used. Use of aromatic diisocyanate having a benzene ring is not preferable, since a coloring substance having a conjugated structure is easily produced due to a photoreaction. In the present invention, therefore, low yellowing type and non-yellowing type aliphatic and alicyclic diisocyanates without a benzene ring are preferably used.

These diisocyanates can be used alone or in combination. The kind, combination and the like of the diisocyanates can be appropriately selected from the aspects of the property of a support and the like to which a composite film is applied (coated and the like), solubility in acrylic monomer, reactivity with hydroxyl group and the like.

In the present invention, a urethane polymer is preferably formed using at least one kind of diisocyanate selected from the group consisting of hexamethylene diisocyanate (HDI), hydrogenated tolylene diisocyanate (HTDI), hydrogenated 4,4-diphenylmethane diisocyanate (HMDI), isophorone diisocyanate (IPDI), and hydrogenated xylene diisocyanate (HXDI), and use of hydrogenated xylene diisocyanate is particularly preferable.

In the present invention, the amount of the diol component and diisocyanate component to be used for forming a urethane polymer as expressed by [NCO]/[OH] (equivalent ratio) is preferably not less than 1.1 and not more than 2.0, more preferably not less than 1.12 and not more than 1.60, and particularly preferably not less than 1.15 and not more than 1.40. When the [NCO]/[OH] (equivalent ratio) is less than 1.1, the molecular weight of the urethane polymer becomes too high, causing high viscosity of a composite film precursor (syrup solution), which may render operation in the following sheeting step difficult. When the [NCO]/[OH] (equivalent ratio) exceeds 2.0, the molecular weight of the urethane polymer becomes small, causing easy decrease of strength at break.

### (Ratio of acrylic component/urethane component in composite film)

In the present invention, the weight ratio of the acrylic component and urethane component forming the composite film is acrylic component/urethane component of not less than 0.25 and not more than 4.00, preferably not less than 0.429 and not more than 2.333, and particularly preferably not less than 0.538 and not more than 1.857. When the acrylic component/urethane component is less than 0.25, the syrup solution has high viscosity, possibly rendering the operation in the following sheeting step difficult. When the acrylic component/urethane component exceeds 4.00, the amount of the urethane polymer in the composite film is less than 25%, the pulling strength at break decreases, and the film cannot be practiced.

A hydroxyl group-containing (meth)acrylic monomer may be add to the above-mentioned urethane polymer. By the addition of a hydroxyl group-containing (meth)acrylic monomer, (meth)acryloyl group can be introduced into the molecular terminal of a urethane prepolymer, whereby an ability to copolymerize with (meth)acrylic monomer is imparted, compatibility of urethane component with acrylic component is enhanced, and S-S (stress - strain) property such as strength at break and the like can also be improved. As the hydroxyl group-containing (meth)acrylic monomer to be used here, hydroxyethyl (meth)acrylate, hydroxypropyl (meth)acrylate, hydroxybutyl (meth)acrylate, hydroxyhexyl (meth)acrylate and the like are used. The amount of the hydroxyl group-containing (meth)acrylic monomer to be used is preferably 0.1 - 10 parts by weight, more preferably 1 - 5 parts by weight, per 100 parts by weight of the urethane polymer.

### (Stabilizer of film)

In view of the weather resistance, a weather resistant film (including a composite film) may be appropriately treated with a weathering stabilizer.

A treatment using the above-mentioned weathering stabilizer (UV absorber, light stabilizer, antioxidant) can be performed by applying or transferring the stabilizer to a surface of the above-mentioned resin layer, blending into the above-mentioned resin layer, and the like.

### (UV absorber)

As a UV absorber, known UV absorbers such as a benzotriazole based UV absorber, a triazine based UV absorber, a benzophenone based UV absorber, a benzoate based UV absorber and the like can be appropriately used. These UV absorbers may be used alone or two or more kinds thereof may be used in a mixture.

Examples of the benzotriazole base UV absorber include 2-(2-hydroxy-5-tert-butylphenyl)-2H-benzotriazole, an ester compound of benzene propane acid and 3-(2H-benzotriazol-2-yl)-5-(1,1-dimethylethyl)-4-hydroxy(C₇ - C₉ side chain and straight chain alkyl), a mixture of octyl-3-[3-tert-butyl-4-hydroxy-5-(5-chloro-2H-benzotriazol-2-yl)phenyl]propionate and 2-ethylhexyl-3-[3-tert-butyl-4-hydroxy-5-(5-chloro-2H-benzotriazol-2-yl)phenyl]propionate, 2-(2H-benzotriazol-2-yl)-4,6-bis(1-methyl-1-phenylethyl)phenol, 2-(2H-benzotriazol-2-yl)-6-(1-methyl-1-phenylethyl)-4-(1,1,3,3-tetramethylbutyl)phenol, a reaction product of methyl-3-(3-(2H-benzotriazol-2-yl)-5-tert-butyl-4-hydroxyphenyl)propionate/polyethylene glycol 300, 2-(2H-benzotriazol-2-yl)-p-cresol, 2-[5-chloro(2H)-benzotriazol-2-yl]-4-methyl-6-(tert-butyl)phenol, 2-(2H-benzotriazol-2-yl)-4,6-di-tert-pentylphenol, 2-(2H-benzotriazol-2-yl)-4-(1,1,3,3-tetramethylbutyl)phenol, 2,2'-methylenebis[6-(2H-benzotriazol-2-yl)-4-(1,1,3,3-tetramethylbutyl)phenol], a reaction product of methyl-3-(3-(2H-benzotriazol-2-yl)-5-tert-butyl-4-hydroxyphenyl)propionate and polyethylene glycol 300, 2-(2H-benzotriazol-2-yl)-6-dodecyl-4-methylphenol, 2-[2-hydroxy-3-(3,4,5,6-tetrahydrophthalimido-methyl)-5-methylphenyl]benzotriazole, 2,2'-methylenebis[6-(benzotriazol-2-yl)-4-tert-octylphenol] and the like.

Examples of the hydroxyphenyltriazine type UV absorber include a reaction product of 2-(4,6-bis(2,4-dimethylphenyl)-1,3,5-triazin-2-yl)-5-hydroxyphenyl and [(C₁₀ - C₁₆, mainly C₁₂ -C₁₃, alkyloxy)methyl]oxirane, a reaction product of 2-(2,4-dihydroxyphenyl)-4,6-bis-(2,4-dimethylphenyl)-1,3,5-triazine and (2-ethylhexyl) glycidate ester, 2,4-bis[2-hydroxy-4-butoxyphenyl]-6-(2,4-dibutoxyphenyl)-1,3,5-triazine, 2-(4,6-diphenyl-1,3,5-triazin-2-yl)-5-[(hexyl)oxy]-phenol, 2-(2-hydroxy-4-[1-octyloxycarbonylethoxy]phenyl)-4,6-bis(4-phenylphenyl)-1,3,5-triazine and the like.

Examples of the benzophenone base UV absorber include 2-hydroxy-4-n-octyloxybenzophenone and the like.

Examples of the benzoate based UV absorber include 2,4-di-tert-butylphenyl-3,5-di-tert-butyl-4-hydroxybenzoate and the like.

Examples of the commercially available benzotriazole base UV absorber include 2-(2-hydroxy-5-tert-butylphenyl)-2H-benzotriazole ("TINUVIN PS" manufactured by BASF Japan Ltd.), an ester compound of benzenepropanoic acid and 3-(2H-benzotriazol-2-yl)-5-(1,1-dimethylethyl)-4-hydroxy(C₇ - C₉ side chain and straight chain alkyl) ("TINUVIN 384-2" manufactured by BASF Japan Ltd.), a mixture of octyl-3-[3-tert-butyl-4-hydroxy-5-(5-chloro-2H-benzotriazol-2-yl)phenyl]propionate and 2-ethylhexyl-3-[3-tert-butyl-4-hydroxy-5-(5-chloro-2H-benzotriazol-2-yl)phenyl]propionate ("TINUVIN 109" manufactured by BASF Japan Ltd.), 2-(2H-benzotriazol-2-yl)-4,6-bis(1-methyl-1-phenylethyl)phenol ("TINUVIN 900" manufactured by BASF Japan Ltd.), 2-(2H-benzotriazol-2-yl)-6-1-methyl-1-phenylethyl)-4-(1,1,3,3-tetramethylbutyl)phenol ("TINUVIN 928" manufactured by BASF Japan Ltd.), a reaction product of methyl-3-(3-(2H-benzotriazol-2-yl)-5-tert-butyl-4-hydroxyphenyl)propionate/polyethylene glycol 300 ("TINUVIN 1130" manufactured by BASF Japan Ltd.), 2-(2H-benzotriazol-2-yl)-p-cresol ("TINUVIN P" manufactured by BASF Japan Ltd.), 2-[5-chloro(2H)-benzotriazol-2-yl]-4-methyl-6-(tert-butyl)phenol ("TINUVIN 326" manufactured by BASF Japan Ltd.), 2-(2H-benzotriazol-2-yl)-4,6-di-tert-pentylphenol ("TINUVIN 328" manufactured by BASF Japan Ltd.), 2-(2H-benzotriazol-2-yl)-4-(1,1,3,3-tetramethylbutyl)phenol ("TINUVIN 329" manufactured by BASF Japan Ltd.), 2,2'-methylenebis[6-(2H-benzotriazol-2-yl)-4-(1,1,3,3-tetramethylbutyl)phenol] ("TINUVIN 360" manufactured by BASF Japan Ltd.), a reaction product of methyl-3-(3-(2H-benzotriazol-2-yl)-5-tert-butyl-4-hydroxyphenyl)propionate and polyethylene glycol 300 ("TINUVIN 213" manufactured by BASF Japan Ltd.), 2-(2H-benzotriazol-2-yl)-6-dodecyl-4-methylphenol ("TINUVIN 571" manufactured by BASF Japan Ltd.), 2-[2-hydroxy-3-(3,4,5,6-tetrahydrophthalimido-methyl)-5-methylphenyl]benzotriazole ("Sumisorb 250" manufactured by Sumitomo Chemical Co., Ltd.), 2,2'-methylenebis[6-(benzotriazol-2-yl)-4-tert-octylphenol] ("ADKSTAB LA31" manufactured by ADEKA CORPORATION) and the like.

Examples of the commercially available hydroxyphenyltriazine base UV absorber include a reaction product of 2-(4,6-bis(2,4-dimethylphenyl)-1,3,5-triazin-2-yl)-5-hydroxyphenyl with oxirane [(C₁₀ - C₁₆, mainly C₁₂ - C₁₃ alkyloxy)methyloxirane] and 1-methoxy-2-propanol ("TINUVIN 400" manufactured by BASF Japan Ltd.), a reaction product of 2-(2,4-dihydroxyphenyl)-4,6-bis-(2,4-dimethylphenyl)-1,3,5-triazine and (2-ethylhexyl)glycidate ester ("TINUVIN 405" manufactured by BASF Japan Ltd.), 2,4-bis[2-hydroxy-4-butoxyphenyl]-6-(2,4-dibutoxyphenyl)-1,3,5-triazine ("TINUVIN 460" manufactured by BASF Japan Ltd.), 2-(4,6-diphenyl-1,3,5-triazin-2-yl)-5-[(hexyl)oxy]-phenol ("TINUVIN 1577" manufactured by BASF Japan Ltd.), 2-(2-hydroxy-4-[1-octyloxycarbonylethoxy]phenyl)-4,6-bis(4-phenylphenyl)-1,3,5-triazine ("TINUVIN 479" manufactured by BASF Japan Ltd.) and the like.

Examples of the commercially available benzophenone base UV absorber include "CHIMASSORB 81" manufactured by BASF Japan Ltd. and the like. Examples of the benzoate based UV absorber include 2,4-di-tert-butylphenyl-3,5-di-tert-butyl-4-hydroxybenzoate ("TINUVIN 120" manufactured by BASF Japan Ltd.) and the like.

In the present invention, the above-mentioned UV absorbers may be used alone or two or more kinds thereof may be used in combination.

The total amount of UV absorber to be used is preferably not less than 0.1 wt% and not more than 4.0 wt%, more preferably not less than 0.5 wt% and not more than 2.0 wt%, per 100 wt% of the composite film precursor. When the content of the UV absorber is not less than 0.1 wt%, absorption of ultraviolet rays causing degradation and coloring is sufficient, and when it is not more than 4.0 wt%, coloring due to UV absorber itself does not occur.

### (Light stabilizer)

As the light stabilizer, known light stabilizers such as hindered amine light stabilizers, benzoate light stabilizer and the like can be appropriately used. These light stabilizers may be used alone or two or more kinds thereof may be used in a mixture.

The amount of the above-mentioned light stabilizer to be added is preferably not more than 5 parts by weight, more preferably not more than 3 parts by weight, still more preferably about 0.1 - 1 part by weight, per 100 parts by weight of the base polymer of each resin layer.

As the light stabilizer to be used in the present invention, a hindered amine light stabilizer (HALS) is preferable, and as the hindered amine light stabilizer, one having a structure represented by the following formula (I) is preferable.

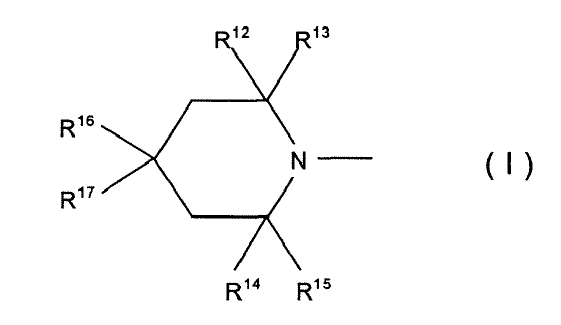

wherein R¹², R¹³, R¹⁴, R¹⁵, R¹⁶ and R¹⁷ are each independently a hydrogen atom, an optionally substituted alkyl group or an optionally substituted alkoxy group.

Examples of the commercially available hindered amine light stabilizer include a light stabilizer which is a polymerized substance of dimethyl succinate and 4-hydroxy-2,2,6,6-tetramethyl-1-piperidine ethanol ("TINUVIN 622" manufactured by BASF Japan Ltd.), a light stabilizer which is a one-to-one reaction product of N,N',N",N"'-tetrakis-(4,6-bis-(butyl-(N-methyl-2,2,6,6-tetramethylpiperidin-4-yl)amino)-triazin-2-yl)-4,7-diazadecane-1,10-diamine with a polymerized substance of dimethyl succinate and 4-hydroxy-2,2,6,6-tetramethyl-1-piperidine ethanol ("TINUVIN 119" manufactured by BASF Japan Ltd.), a light stabilizer which is a polycondensate of dibutylamine 1,3-triazine N,N'-bis(2,2,6,6-tetramethyl-4-piperidyl-1,6-hexamethylenediamine and N-(2,2,6,6-tetramethyl-4-piperidyl)butylamine ("TINUVIN 2020" manufactured by BASF Japan Ltd.), a light stabilizer which is poly[{6-(1,1,3,3-tetramethylbutyl)amino-1,3,5-triazine-2,4-diyl}{2,2,6,6-tetramethyl-4-piperidyl}imino]hexamethylene{(2,6,6-tetramethyl-4-piperidyl)imino}) ("TINUVIN 944" manufactured by BASF Japan Ltd.), a light stabilizer which is a mixture of bis(1,2,2,6,6-pentamethyl-4-piperidyl)sebacate and methyl 1,2,2,6,6-pentamethyl-4-piperidyl sebacate ("TINUVIN 765" manufactured by BASF Japan Ltd.), a light stabilizer which is bis(2,2,6,6-tetramethyl-4-piperidyl)sebacate ("TINUVIN 770" manufactured by BASF Japan Ltd.), a light stabilizer which is a reaction product of decanedioic acid bis(2,2,6,6-tetramethyl-1-(octyloxy)-4-piperidinyl)ester (1,1-dimethylethylhydroperoxide) and octane ("TINUVIN 123" manufactured by BASF Japan Ltd.), a light stabilizer which is bis(1,2,2,6,6-pentamethyl-4-piperidyl)[[3,5-bis(1,1-dimethylethyl)-4-hydroxyphenyl]methyl]butyl malonate ("TINUVIN 144" manufactured by BASF Japan Ltd.), a light stabilizer which is a reaction product of 2-aminoethanol with a reaction product of cyclohexane and peroxidized N-butyl-2,2,6,6-tetramethyl-4-piperidineamine-2,4,6-trichloro-1,3,5-triazine ("TINUVIN 152" manufactured by BASF Japan Ltd.), a light stabilizer which is a mixture of bis(1,2,2,6,6-pentamethyl-4-piperidyl)sebacate and methyl-1,2,2,6,6-pentamethyl-4-piperidyl sebacate ("TINUVIN 292" manufactured by BASF Japan Ltd.) and the like.

In the present invention, the above-mentioned hindered amine light stabilizers may be used alone or two or more kinds thereof may be used in combination. The total amount of these hindered amine light stabilizers to be used is preferably not less than 0.1 wt% and not more than 4.0 wt%, more preferably not less than 0.5 wt% and not more than 2.0 wt%, per 100 wt% of a composite film precursor. When the amount of the hindered amine light stabilizer to be used is not less than 0.1 wt%, a deterioration-preventive function is sufficiently expressed, and when it is not more than 4.0 wt%, coloring due to the light stabilizer itself does not occur.

### (Antioxidant)

As the antioxidant, known antioxidants such as hindered phenolic antioxidant, phosphorus processing heat stabilizer, lactone processing heat stabilizer, sulfur heat resistance stabilizer and the like can be appropriately used. These antioxidants may be used alone or two or more kinds thereof may be used in a mixture.

The amount of the above-mentioned antioxidant to be added is preferably not more than 3 parts by weight, more preferably not more than 1 part by weight, still more preferably about 0.01 - 0.5 part by weight, per 100 parts by weight of the base polymer of each resin layer.

In addition, filler, pigment, colorant, flame-retardant, antistatic agent and the like, which do not impair the effect of the present invention, can be added as long as the effect of the invention is not inhibited. These additives are used in general amounts depending on the kind thereof.

### (Surface treatment of substrate)

In one embodiment of the protection film of the present invention, an embodiment of a surface treatment having a dirt-preventing effect includes forming a coat layer (surface treatment layer) comprised of a fluoroethylene vinyl ether copolymer on a surface opposite to the pressure-sensitive adhesive layer of the film. The fluoroethylene vinyl ether copolymer is preferably represented by the following formula (II) and alternately has a fluoroethylene unit and a vinylether unit.

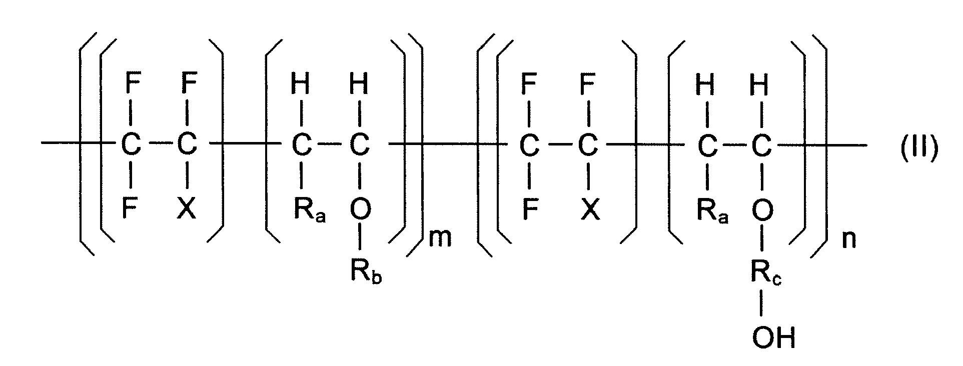

In the formula (II), X is fluorine, chlorine or bromine, Rₐ is H or a C₁ - C₁₀ alkyl group, R_{b} is a C₁ - C₁₆ alkyl group, R_{c} is a C₁ - C₁₆ alkylene group, and m and n are each an integer.

The weight average molecular weight of the fluoroethylene vinyl ether alternating copolymer is 1,000 - 2,000,000, preferably 5,000 - 1,000,000, more preferably 10,000 - 500,000. In the present invention, m and n in the above-mentioned formula (II) are selected from the range such that the weight average molecular weight of the fluoroethylene vinyl ether alternating copolymer is 1,000 - 2,000,000.

The weight average molecular weight of the fluoroethylene vinyl ether alternating copolymer can be measured by GPC method. The measurement method of the GPC method is as follows. To be specific, a fluoroethylene vinyl ether alternating copolymer is adjusted to 2.0 g/L with THF solution and stood for 12 hr. Then, the solution is filtered through a 0.45 µm membrane filter, and the filtrate is subjected to a GPC measurement under the following measurement conditions using "HLC-8120GPC" manufactured by TOSOH Corporation as an analyzer. Measurement conditions:
column TSKgel GMH-H(S)x2
column size 7.8 mmI.D x 300 mm
eluent THF
flow 0.5 mL/min
detector RI
column temperature 40°C
injection volume 100 µL

The substrate preferably has a constitution having a coat layer on one surface of the composite film and a pressure-sensitive adhesive layer on the other surface. The thickness of the coat layer is preferably 2 - 100 µm, more preferably 5 - 50 µm, still more preferably 8 - 40 µm. When the thickness of the coat layer is less than 2 µm, defective parts without a coat layer such as pinholes and the like are easily produced, and the property of the coat layer may not be sufficiently exhibited. When it exceeds 100 µm, the property of the coat layer may decrease the property of the composite film.

### (Crosslinking of composite film and coat layer)

A protection film in one embodiment of the present invention preferably has a crosslinking point of a coat layer with a composite film. A structure having a crosslinking point can be obtained by, for example, binding a component constituting a coat layer with a component constituting a composite film to form a crosslinking point. When, for example, isocyanate used for the formation of a coat layer contains a residual isocyanate group, the residual isocyanate group reacts with a hydroxyl group of a urethane polymer - acrylic monomer mixture to form a crosslinking point. Alternatively, when a fluoroethylene vinyl ether alternating copolymer used for the formation of a coat layer contains a residual hydroxyl group, the hydroxyl group reacts with an isocyanate group present in a composite film coating liquid to form a crosslinking point. Therefore, in the present invention, when a composite film coating liquid is applied, the coat layer preferably contains a residual isocyanate group or a residual hydroxyl group in a state permitting reaction. Moreover, a composite film coating liquid is preferably applied before perfect completion of a crosslinking reaction of a coat layer.

When a crosslinking structure of a coat layer and a composite film is formed, superior adhesiveness can be exhibited. Therefore, a surface coat layer can maintain superior adhesiveness to a composite film for a long time. As a result, even when an application sheet is adhered for positioning of a protection film, a surface coat layer is not peeled off upon detachment of the application sheet.

For formation of a crosslinking structure by a surface coat layer and a composite film, the surface coat layer needs to be formed from a fluoroethylene vinyl ether alternating copolymer, and the composite film needs to contain an acrylic polymer and a urethane polymer.

In one embodiment of the present invention, a surface coat layer and a composite film may form a crosslinking structure by any method. For example, a surface coat layer is applied, dried and cured, and a composite film coating liquid is applied to a coat layer surface in a partially cured state to form a crosslinking point. Alternatively, even when the surface is completely cured, a composite film coating liquid can be applied to form a crosslinking point as long as a residual isocyanate group can react. Therefore, the crosslinking structure is preferably designed as appropriate in consideration of the kind, amount and the like of the components to be used for the formation of a coat layer and a composite film. For example, when a residual isocyanate group can react, a crosslinking structure can be formed by applying a composite film coating liquid within 24 hours to allow a photo-curing reaction. When a residual isocyanate group can react and is preserved at about 5°C, a crosslinking structure can be formed by applying a composite film coating liquid within 5 days to allow a photo-curing reaction. When an isocyanate crosslinking agent is previously reacted with a hydroxyl group-containing monomer, a residual isocyanate group can react even after preservation at 50°C for 1 week or longer.

### (Production of coat layer)

In one embodiment of the present invention, a fluoroethylene vinyl ether alternating copolymer is dissolved in a solvent, multifunctional isocyanate is added thereto to form a coat layer coating liquid, and a coat layer is formed using the solution. For example, the solution is applied to a release-treated polyethylene film and dried to form a coat layer. Then, a mixture of a urethane polymer and an acrylic monomer (a composite film coating liquid) is applied onto the coat layer and ultraviolet ray and the like are irradiated to give a laminate having a structure wherein a coat layer is crosslinked with a composite film (composite film is crosslinked with coat layer).

Alternatively, a hydroxyl group-containing monomer is reacted with multifunctional isocyanate, a fluoroethylene vinyl ether alternating copolymer is added, and a coat layer is formed using the solution. For example, the solution is applied onto a release-treated PET film and dried to give a coat layer. Then, a composite film coating liquid of an acrylic monomer and urethane polymer is applied onto the coat layer and ultraviolet ray and the like are irradiated for curing to give a laminate having a structure wherein a coat layer is crosslinked with a composite film (composite film is crosslinked with coat layer).

As for the above-mentioned multifunctional isocyanate, examples of the multifunctional isocyanate having two or more isocyanate groups in a molecule include bifunctional isocyanate such as hydrogenated xylylene diisocyanate, hexamethylene diisocyanate, isophorone diisocyanate, hydrogenated diphenylmethane diisocyanate, ethylene diisocyanate, 1,4-tetramethylene diisocyanate, trimethylhexamethylene diisocyanate, norbornane diisocyanate, trifunctional isocyanate such as Desmodur N3200 (manufactured by Sumika Bayer Urethane Co., Ltd.), CORONATE L, HL, HX (manufactured by Nippon Polyurethane Industry Co., Ltd.), TAKENATE D-140N, D-127, D-110N (manufactured by Mitsui Chemicals, Inc.), and the like. In the present invention, these multifunctional isocyanates may be used alone or two or more kinds thereof may be used in combination.

When a hydroxyl group-containing monomer is reacted with multifunctional isocyanate, the ratio of the number of moles [OH] of a hydroxyl group of a hydroxyl group-containing monomer to the number of moles [NCO] of an isocyanate group of multifunctional isocyanate ([OH]/[NCO]) is 0.05 - 0.5, preferably 0.05 - 0.4, more preferably 0.05 - 0.3.

The above-mentioned hydroxyl group-containing monomer has one or more hydroxyl groups in a molecule, and one or more (meth)acrylic groups in a molecule. Examples of the hydroxyl group-containing monomer include 2-hydroxyethyl acrylate, 2-hydroxyethyl methacrylate, 4-hydroxybutyl acrylate, 4-hydroxybutyl methacrylate, 1,4-cyclohexane dimethanol monoacrylate, 1,4-cyclohexane dimethanol monomethacrylate, 2-hydroxypropyl acrylate, 2-hydroxypropyl methacrylate, pentaerythritol acrylate and the like. In the present invention, these hydroxyl group-containing monomers may be used alone or two or more kinds thereof may be used in combination.

### (Substrate with multi-layer structure)

In one embodiment of the present invention, other film can be laminated on one surface of a composite film (surface on the side free of coat layer) of the substrate as long as the effect of the present invention is not impaired. Example of the materials forming such other film include a thermoplastic resin including a polyester based resin such as poly(ethylene terephthalate) (PET) and the like, a polyolefin based resin such as polyethylene (PE), polypropylene (PP) and the like, polyimide (PI), polyether ether ketone (PEEK), polyvinyl chloride (PVC), a polyvinyldene chloride based resin, a polyamide resin, a polyurethane based resin, a polystyrene based resin, an acrylic resin, a fluorine based resin, a cellulose based resin, a polycarbonate based resin and the like, as well as a thermosetting resin and the like. When the above-mentioned coat layer is formed, it is preferably formed on the outermost layer of the substrate.

### (Thickness of substrate)

While the total thickness of the substrate is not particularly limited, it is preferably not less than 2 µm and not more than 500 µm, more preferably not less than 12 µm and not more than 400 µm. When the substrate has a multi-layer structure, the thickness of each layer (i.e., each film) is not particularly limited. It is preferably not less than 2 µm and not more than 500 µm, more preferably not less than 12 µm and not more than 400 µm.

### (Pressure-sensitive adhesive layer)

The protection film in one embodiment of the present invention has a pressure-sensitive adhesive layer on one surface of the substrate. A pressure-sensitive adhesive forming the pressure-sensitive adhesive layer may be conventional one such as acrylic, rubber based, silicone based etc. Considering adhesiveness at low temperature, maintenance at a high temperature, cost and the like, an acrylic pressure-sensitive adhesive is preferable.

For example, an acrylic pressure-sensitive adhesive is suitable for a pressure-sensitive adhesive layer having a strong adhesive force. The acrylic pressure-sensitive adhesive includes one or more kinds of acrylic copolymers obtained by copolymerizing monomer components containing a (meth)acrylic ester as the main component with monomer components having a functional group such as a carboxyl group and a hydroxyl group.

Examples of the (meth)acrylic ester include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, pentyl (meth)acrylate, isopentyl (meth)acrylate, hexyl (meth)acrylate, cyclohexyl (meth)acrylate, heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, isobornyl (meth)acrylate, 1-adamantyl (meth)acrylate and the like. One or more kinds of such alkyl(meth)acrylates can be used.

The above-mentioned alkyl (meth)acrylate can copolymerize with the following monomer component. Examples of the copolymerizable monomer component include a carboxyl group-containing monomer such as (meth)acrylic acid, itaconic acid, maleic acid, crotonic acid, fumaric acid, carboxyethyl (meth)acrylate, carboxypentyl (meth)acrylate; a hydroxyl group-containing monomer such as 2-hydroxyethyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate; a glycidyl group-containing monomer such as glycidyl (meth)acrylate, methylglycidyl (meth)acrylate; a cyanoacrylate series monomer such as acrylonitrile, methacrylonitrile; a nitrogen-containing monomer such as N,N-dimethylaminoethyl (meth)acrylate, N,N-dimethylaminopropyl (meth)acrylamide, N,N-dimethyl (meth)acrylamide, N,N-diethyl (meth)acrylamide, N-isopropyl (meth)acrylamide, N-hydroxyethyl (meth)acrylamide, (meth)acryloyl morpholine, N-vinyl-2-piperidone, N-vinyl-3-morpholinone, N-vinyl-2-caprolactam, N-vinyl-2-pyrrolidone, N-vinyl-1,3-oxazin-2-one, N-vinyl-3,5-morpholinedione, N-cyclohexylmaleimide, N-phenylmaleimide, N-acryloylpyrrolidine, tert-butylaminoethyl (meth)acrylate; a monomer such as styrene, a styrene derivative, vinyl acetate, and the like. One or more kinds of these monomers are copolymerized as necessary with (meth)acrylic ester and used.

A pressure-sensitive adhesive to be used for the protection film in one embodiment of the present invention preferably contains at least one kind selected from the group consisting of 2-ethylhexyl acrylate and isononyl acrylate, and at least one kind of a carboxyl group-containing monomer selected from the group consisting of acrylic acid and methacrylic acid. That is, as a pressure-sensitive adhesive to be used in the present invention, a copolymer obtained by copolymerizing a main monomer such as 2-ethylhexyl acrylate, isononyl acrylate and the like with a carboxyl group-containing monomer such as acrylic acid, methacrylic acid and the like can be used.

### (Foam-containing pressure-sensitive adhesive layer)

The pressure-sensitive adhesive layer in one embodiment of the protection film of the present invention may be a foam-containing pressure-sensitive adhesive layer. When a pressure-sensitive adhesive layer contains foams, the pressure-sensitive adhesive layer can exhibit good adhesiveness to a curved surface or an uneven surface, as well as good repulsion resistance.

The foams contained in the foam-containing pressure-sensitive adhesive layer are desirably basically closed cell type foams. However, closed cell type foams and open cell type foams may coexist.

Such foams generally have a spherical shape (particularly perfect spherical shape), but may have an irregular spherical shape. An average diameter of the foam is not particularly limited and, for example, selected from the range of 1 - 1000 µm, preferably 10 - 500 µm, more preferably 30 - 300 µm.

A gas component contained in a foam (sometimes to be referred to as gas component-forming foams "foam-forming gas") is not particularly limited, and an inert gas such as nitrogen, carbon dioxide, argon and the like, and various gas components can be used. When a reaction such as polymerization reaction and the like is performed when a foam-forming gas is contained, the foam-forming gas needs to be inert to the reaction. As a foam-forming gas, nitrogen is preferable since it does not inhibit the reaction, is advantageous in cost and the like.

The amount of foams in a pressure-sensitive adhesive layer is not particularly limited, and can be appropriately determined according to the use of the pressure-sensitive adhesive tape comprising the pressure-sensitive adhesive layer and the like. For example, it can be set to not less than 10%, preferably not less than 11%, more preferably not less than 12%, relative to the total volume of a pressure-sensitive adhesive layer. The upper limit of the amount of foams in a pressure-sensitive adhesive layer is not particularly limited and, for example, it can be set to not more than 50%, preferably not more than 40%, more preferably not more than 30%.

In a pressure-sensitive adhesive layer containing such foams (sometimes to be referred to as a "foam-containing pressure-sensitive adhesive layer"), the shape of the foams to be formed is not particularly limited. Examples of the foam-containing pressure-sensitive adhesive layer include (1) a foam-containing pressure-sensitive adhesive layer wherein foams were formed by using a (photopolymerizable) acrylic pressure-sensitive adhesive composition (sometimes to be referred to as a "foam-containing (photopolymerizable) acrylic pressure-sensitive adhesive composition") previously mixed with a gas component that produces foams (foam-forming gas), (2) a foam-containing pressure-sensitive adhesive layer wherein foams were formed by using a (photopolymerizable) acrylic pressure-sensitive adhesive composition containing a foaming agent and the like.
In one embodiment of the present invention, a foam-containing pressure-sensitive adhesive layer wherein foams were formed by using a foam-containing photopolymerizable acrylic pressure-sensitive adhesive composition is preferable. The amount of foams in the foam-containing photopolymerizable acrylic pressure-sensitive adhesive composition can be appropriately determined from the range corresponding to the amount of foams in the foam-containing pressure-sensitive adhesive layer.

A method of mixing foams is not particularly limited, and a known foam mixing method can be utilized. Examples of the foaming apparatus include an apparatus having a disk with a through-hole in the center, a stator with many small gear teeth and provided on the disk, and a rotor having small gear teeth like those of the stator, which is provided on the disk such that it is opposed to the stator and the like.
In this apparatus, a pressure-sensitive adhesive precursor is introduced in between the gear teeth on the stator and the gear teeth on the rotor, the rotor is rotated at a high-speed during which a gas component (foam-forming gas) for forming foams through the through-hole is introduced into a pressure-sensitive adhesive precursor, whereby a foam-containing pressure-sensitive adhesive composition, wherein the foam-forming gas is finely dispersed in and mixed with a pressure-sensitive adhesive precursor, can be obtained.

To suppress or prevent coalescence of foams, the steps of from mixing of foams to the formation of a foam-containing pressure-sensitive adhesive layer are preferably performed continuously as a series of steps. That is, the foam-containing pressure-sensitive adhesive layer is preferably formed by preparing a foam-containing pressure-sensitive adhesive composition by mixing foams as mentioned above, then subjecting the foam-containing pressure-sensitive adhesive composition to a known method for forming a pressure-sensitive adhesive layer.

On the other hand, when the foam-containing pressure-sensitive adhesive layer contains foams formed by using a photopolymerizable acrylic pressure-sensitive adhesive composition containing a foaming agent, the foaming agent is not particularly limited and can be appropriately selected from, for example, known foaming agent. As the foaming agent, for example, thermally expandable microsphere and the like can be used.

The foam-containing pressure-sensitive adhesive layer can also be produced by blending a hollow microspherical material in a pressure-sensitive adhesive composition. As a hollow microspherical material to be used for the foam-containing pressure-sensitive adhesive layer, a hollow inorganic microspherical material and a hollow organic microspherical material can be mentioned. Specific examples of the hollow inorganic microspherical material include hollow balloon made of glass such as hollow glass balloon and the like; hollow balloon made of a metal compound such as hollow alumina balloon and the like; hollow balloon made of porcelain such as hollow ceramic balloon and the like; and the like. Examples of the hollow organic microspherical material include hollow balloon made of a resin such as hollow acrylic balloon, hollow vinylidene chloride balloon and the like, and the like. Moreover, the surface of a hollow microspherical material may be subjected to various surface treatments (e.g., a treatment reducing surface tension by a silicone based compound, a fluorinated compound and the like, and the like).

While the particle size (average particle diameter) of a hollow microspherical material is not particularly limited, it can be selected from, for example, 1 - 500 µm (preferably 5 - 200 µm, more preferably 10 - 100 µm).

While the specific gravity of a hollow microspherical material is not particularly limited, it can be selected from, for example, 0.1 - 0.8 g/cm³ (preferably 0.12 - 0.5 g/cm³). When a hollow microspherical material has a specific gravity lower than 0.1 g/cm³, the material cannot be dispersed uniformly with ease, since it floats more when mixed with a pressure-sensitive adhesive constituting a foam-containing pressure-sensitive adhesive layer. On the other hand, when the specific gravity is higher than 0.8 g/cm³, the material becomes costly, thus increasing the production cost.

The amount of the hollow microspherical material to be used is not particularly limited and, for example, it is 10 - 50 volume % (% by volume), preferably 15 - 40 volume %, relative to the total volume of the foam-containing pressure-sensitive adhesive layer. When the amount of the hollow microspherical material to be used is less than 10 volume % relative to the total volume of the foam-containing pressure-sensitive adhesive layer, the effect afforded by the addition of the hollow microspherical material tends to decrease. When the amount exceeds 50 volume %, an adhesive force of the foam-containing pressure-sensitive adhesive layer tends to decrease.

### (Properties of protection film)

The thickness of a pressure-sensitive adhesive layer is not particularly limited, and can be optionally set. The thickness of a foam-containing pressure-sensitive adhesive layer is preferably not less than 0.1 mm and not more than 2.0 mm, more preferably not less than 0.2 mm and not more than 1.2 mm. The thickness of a pressure-sensitive adhesive layer without foams is preferably not less than 10 µm and not more than 500 µm, more preferably not less than 20 µm and not more than 200 µm.

In one embodiment of the present invention, a pressure-sensitive adhesive layer can be subjected to, for example, a method including directly applying a solvent pressure-sensitive adhesive or emulsion pressure-sensitive adhesive to a substrate and drying the substrate, a method including applying the pressure-sensitive adhesive to a release paper to previously form a pressure-sensitive adhesive layer, and laminating the pressure-sensitive adhesive layer on a substrate and the like.

In one embodiment of the present invention, a protection film preferably has a 100% modulus of not less than 1.0 MPa and not more than 10.0 MPa, more preferably not less than 1.50 MPa and not more than 8.0 MPa, particularly preferably not less than 2.0 MPa and not more than 6.0 MPa. When a protection film shows a 100% modulus at 23°C of not less than 1.0 MPa and not more than 10 MPa, it has well-balanced flexibility and rigidity, and an adhesion operation to curved surfaces such as a bent part, a corner part and the like can be performed well.

Here, the 100% modulus at 23°C means a stress per unit area at 100% elongation of a pressure-sensitive adhesive sheet, which is obtained by performing a tensile test at tension speed 200 mm/min, distance between chucks 50 mm, room temperature (23°C) and determining a stress-strain curve.

In one embodiment of the present invention, the protection film preferably has an elongation at break of not less than 200% and not more than 1,000%, more preferably not less than 250% and not more than 800%, particularly preferably not less than 300% and not more than 600%. When the elongation at break is not less than 200%, adhesion operation to a curved surface etc. proceeds smoothly, since a pressure-sensitive adhesive sheet is sufficiently stretched during adhesion. When the elongation at break is not more than 1,000%, adhesion operation proceeds smoothly, since a pressure-sensitive adhesive sheet is not stretched excessively during adhesion.

The elongation at break here is a value obtained by dividing elongation upon breakage of a pressure-sensitive adhesive sheet by distance between chucks (50 mm) in a tensile test performed using a pressure-sensitive adhesive sheet (width 1 cm, length 13 cm) at a tension speed 200 mm/min, distance between chucks 50 mm, room temperature (23°C).

In one embodiment of the present invention, the protection film shows strength at break of preferably not less than 10 MPa and not more than 100 MPa, more preferably not less than 15 MPa and not more than 90 MPa, particularly preferably not less than 20 MPa and not more than 80 MPa. When the strength at break is within this range, the surface of the pressure-sensitive adhesive sheet is not damaged even when collision of sand, pebbles and the like occurs and the good appearance of the blades for wind power generators is not impaired. In addition, the pressure-sensitive adhesive sheet can easily follow the curved surface of blades.

The strength at break here is a force upon breakage of a pressure-sensitive adhesive sheet in a tensile test performed using a pressure-sensitive adhesive sheet (width 1 cm x length 13 cm) at tension speed 200 mm/min, distance between chucks 50 mm, room temperature (23°C).

While the thickness of the protection film is not particularly limited, it is preferably not less than 20 µm and not more than 3000 µm, more preferably not less than 40 µm and not more than 2000 µm.

In one embodiment of the present invention, the protection film is required to be transparent so that the color and the like of the coated surface of an adherend can be directly reflected on the appearance. On the other hand, the protection film may be dyed with pigments and the like in the same color as or different color from that of the coated surface.

### (Production method of protection film)

The production method of the protection film in one embodiment of the present invention is explained in the following. For example, a coating liquid for a surface coat layer is applied to a release-treated surface of a release-treated poly(ethylene terephthalate) film (preliminary support 1) to form a surface coat layer, and a composite film coating liquid is applied thereon. A transparent separator and the like are placed thereon, and ultraviolet ray and the like are irradiated thereon to form a composite film while forming a crosslinking point, after which the separator is removed. Separately, a pressure-sensitive adhesive layer coating liquid is applied to a release-treated surface of a release-treated polyester film (preliminary support 2) to form a pressure-sensitive adhesive layer. Then, the pressure-sensitive adhesive layer is laid on top of a composite film surface to give a protection film. The layer constitution here is release-treated poly(ethylene terephthalate) film (preliminary support 1)/surface coat layer/composite film/pressure-sensitive adhesive layer/release-treated polyester film (preliminary support 2). Since the preliminary support 1 and preliminary support 2 are detached and removed when in use (during adhesion and application of the protection film), they are not included in the constitution of the protection film of the present invention. It is possible to appropriately set the preliminary support 1, preliminary support 2 and the like as necessary, and such constitution belongs to the technical scope of the present invention.

In one embodiment of the present invention, the protection film can simultaneously achieve high strength and high elongation at break, and is superior in the flexibility to conform to curved surfaces. In one embodiment of the present invention, moreover, since the coat layer of the protection film firmly adheres to the composite film, and is not peeled off by, for example, positioning and the like using an application sheet during adhesion operation. Therefore, it is preferable as a protection film for blades of wind power generators.

### Examples

The present invention is explained in detail in the following by referring to Examples, which are not to be construed as limitative. In the following Examples, unless otherwise specified, parts means parts by weight and % means wt%.

The measurement methods and evaluation methods used in the following Examples are explained.

### <Measurement method and evaluation method>

### (1) Weather resistance (yellowing resistance) evaluation

Each sample of a protection film for blades was pressure bonded to a white coated plate (manufactured by Nippon Testpanel Co., Ltd., dull steel plate "JIS G3141", with white acrylic baking) by one reciprocation of a 2 kg roller, and stood at 23°C for 24 hr. Thereafter, each sample was set in Sunshine Weather Meter (manufactured by Suga Test Instruments Co., Ltd.), and irradiated light (300 - 700 nm, 255 W/m²) for 1,000 hr. The protection film for blades was visually observed to confirm discoloration (yellow), and judged either no discoloration (OK) or discoloration (NG).

### (2) Evaluation of resistance to dirt adhesion

A protection film for blades was pressure bonded to a white coated plate (manufactured by Nippon Testpanel Co., Ltd., dull steel plate "JIS G3141", with white acrylic baking) by one reciprocation of a 2 kg roller, and stood at 23°C for 24 hr. Then, stones with a diameter of 2 - 5 mm were shot against the protection film on the white coated plate at 0.4 MPa using Gravel Chipping Test Instrument (manufactured by Suga Test Instruments Co., Ltd.). Thereafter, the dirt on the surface of the protection film was wiped with a cloth, and the presence or absence of the dirt was observed. When the dirt was wiped off, the film was judged as no attachment (OK), and when the dirt was not wiped off, the film was judged as attachment (NG).

### (Example 1)

A protection film for blades having the following laminate constitution was prepared. [Layer constitution] fluorine coat (surface treatment)/acrylic-urethane composite film or sheet (substrate)/HYPERJOINT H9008 (pressure-sensitive adhesive layer)

### <Production method>

### 1. Preparation of acrylic-urethane composite film composition (step 1)

Acrylic acid (AA) (13.74 parts), isobornyl acrylate (IBXA) (97.52 parts) and n-butyl acrylate (BA) (26.10 parts) as acrylic monomers, and polyoxytetramethylene glycol (PTMG) (number average molecular weight 650, manufactured by Mitsubishi Chemical Corporation) (100 parts) as polyol were charged in a reaction vessel provided with a condenser tube, a thermometer and a stirring apparatus, and hydrogenated xylylene diisocyanate (37.36 parts, TAKENATE 600 (H6XDI), manufactured by Mitsui Chemicals, Inc.) was added dropwise with stirring. The mixture was reacted at 65°C for 12 hr, 4-hydroxybutyl acrylate (4-HBA) (5.55 parts) was added, and the mixture was stirred for 1 hr to give a (urethane polymer-acrylic monomer) mixture.

Thereafter, bis(2,4,6-trimethylbenzoyl)-phenylphosphineoxide (manufactured by BASF Japan Ltd., "IRGACURE 819") (0.15 part) as a photopolymerization initiator, trimethylolpropanetriacrylate (TMP3A) (3 parts) as a crosslinking agent, a UV absorber comprised of a reaction product of 2-(4,6-bis(2,4-dimethylphenyl)-1-3,5-triazin-2-yl)-5-hydroxyphenyl with oxirane [(C₁₀ - C₁₆, mainly C₁₂ - C₁₃ alkyloxy)methyloxirane] and 1-methoxy-2-propanol (manufactured by BASF Japan Ltd., "TINUVIN 400") (1.25 parts), and a reaction product of decanedioic acid bis(2,2,6,6-tetramethyl-1-(octyloxy)-4-piperidinyl)ester, 1,1-dimethylethylhydroperoxide and octane (manufactured by BASF Japan Ltd., "TINUVIN 123") (1.25 parts) as a light stabilizer were added to give a mixture of a urethane polymer and acrylic monomers (acrylic-urethane composite film composition).

### 2. Preparation of fluorine coat treating agent (step 2)

To a 50% concentration solution of fluoroethylene vinyl ether in xylene and toluene (manufactured by ASAHI GLASS CO., LTD., "LF600") (100 parts) were added 11.9 parts of isocyanate crosslinking agent (manufactured by Nippon Polyurethane Industry Co., Ltd., "CORONATEHX") as a curing agent, 0.35 part of dibutyltinlauric acid (manufactured by Tokyo Fine Chemical CO., LTD., "OL1") diluted with xylene as a catalyst (solid content concentration 0.1%) and 98.2 parts of toluene and 11.0 parts of methyl ethyl ketone (MEK) as dilution solvents to give a fluorine coat treating agent (solid content 28%).

### 3. Preparation of substrate (step 3)

The fluorine coat treating agent obtained in step 2 was applied to a release-treated 75 µm-thick poly(ethylene terephthalate) (PTE) film as a preliminary support, and dried and cured at 140°C for 3 min to form a 10 µm-thick fluoroethylene vinyl ether alternating copolymer layer on the preliminary support. The fluoroethylene vinyl ether alternating copolymer layer was cured and once stood. Thereafter, during the period of from day 4 (after 72 hr) to day 7 (168 hr), the acrylic-urethane composite film composition prepared in step 1 was applied onto the fluoroethylene vinyl ether alternating copolymer layer such that the thickness after curing was 290 µm, and the release-treated second PET film was laminated thereon as a separator. The surface of the second PET film was exposed to ultraviolet rays from a metal halide lamp (illuminance 290 mW/cm², quantity of light 4,600 mJ/cm²) to perform photocuring of the acrylic-urethane composite film composition, whereby a laminate comprising a fluoroethylene vinyl ether alternating copolymer layer and an acrylic-urethane composite film formed in this order on a preliminary support, and the second PET film (separator) laminated thereon was prepared.

### 4. Preparation of protection film for blades (step 4)

The second PET film (separator) was detached from the laminate prepared in step 3, a double-faced pressure-sensitive adhesive tape (trade name: HYPERJOINT H9008, manufactured by NITTO DENKO CORPORATION, thickness: 800 µm) was adhered on the exposed acrylic-urethane composite film, and the preliminary support on the fluoroethylene vinyl ether alternating copolymer layer was detached to give a protection film for blades. The double-faced pressure-sensitive adhesive tape used was superior in heat resistance and water resistance, and had a high adhesion strength. The protection film for blades used in Example 1 had an about 10 µm-thick fluorine coat layer formed on one surface of the acrylic-urethane composite film and a strong pressure-sensitive adhesive layer on the other surface.

### (Example 2)

A protection film for blades having the following constitution was prepared.

### [Layer constitution] fluorine coat (surface treatment)/PET film (substrate)/HYPERJOINT H9008 (pressure-sensitive adhesive layer)

### <Production method>

The same fluorine coat treating agent as in Example 1 was applied to one surface of a PET film (trade name: X10S, manufactured by Toray Industries, Inc., thickness 188 µm), dried and cured at 140°C for 3 min to form a 10 µm-thick fluoroethylene vinyl ether alternating copolymer layer. Furthermore, a double-faced pressure-sensitive adhesive tape (trade name: HYPERJOINT H9008, manufactured by NITTO DENKO CORPORATION, thickness: 800 µm) was adhered to the other surface of the PET film to give a protection film for blades.

### (Example 3)

A protection film for blades having the following constitution was prepared.

### [Layer constitution] PTFE film (substrate)/HYPERJOINT H9008 (pressure-sensitive adhesive layer)

### <Production method>

A double-faced pressure-sensitive adhesive tape (trade name: HYPERJOINT H9008, manufactured by NITTO DENKO CORPORATION, thickness: 800 µm) was adhered to one surface of polytetrafluoroethylene (tetra-fluorinated ethylene, PTFE) film (thickness: 85 µm, trade name: NTF-1122, manufactured by NITTO DENKO CORPORATION) to give a protection film for blades.

### (Example 4)

A protection film for blades having a foam-containing pressure-sensitive adhesive layer was prepared.

### [Layer constitution] fluorine coat (surface treatment)/acrylic-urethane composite film or sheet (substrate)/foam-containing pressure-sensitive adhesive layer

### <Production method>

### 1. Preparation of foam containing pressure-sensitive adhesive composition

A monomer mixture of 2-ethylhexyl acrylate (90 parts by weight) and acrylic acid (10 parts by weight) as a monomer component was mixed with IRGACURE 651 (0.05 part by weight) and IRGACURE 184 (0.05 part by weight) as photopolymerization initiators. IRGACURE is a trade name of BASF Japan Ltd.

The mixture was exposed to ultraviolet rays (UV) until the viscosity (BH viscometer, No. 5 rotor, 10 rpm, measurement temperature: 30°C) became about 15Pa·s to give a partly polymerized composition (syrup). Thereafter, as a surfactant, 0.7 part by weight of "Surflon S-393" (trade name, manufactured by AGC SEIMI CHEMICAL CO., LTD.; perfluoroalkyl surfactant) was added per 100 parts by weight of the total monomer component (2-ethylhexyl acrylate and acrylic acid), based on the solid content, and mixed to give a pressure-sensitive adhesive precursor. The pressure-sensitive adhesive precursor was placed in a beaker, and a nitrogen gas was introduced into the pressure-sensitive adhesive precursor by bubbling from the bottom, during which a homomixer rolled foams into the pressure-sensitive adhesive precursor, whereby a foam containing pressure-sensitive adhesive composition was obtained.

### 2. Preparation of foam-containing pressure-sensitive adhesive layer

The above-mentioned foam containing pressure-sensitive adhesive composition was applied onto a release-treated surface of a poly(ethylene terephthalate) substrate (process separator) such that the thickness after drying and curing was 0.8 mm, and a poly(ethylene terephthalate) substrate (cover separator) having one release-treated surface was laminated thereon such that the release-treated surface came into contact therewith. The laminate was exposed to UV irradiation at ultraviolet ray illuminance: 4.0 mW/cm² for 10 min using a black-light lamp to cure the foam-containing pressure-sensitive adhesive, whereby a foam-containing pressure-sensitive adhesive layer was prepared.

### 3. Adhesion of foam-containing pressure-sensitive adhesive layer to protection film

The cover separator was peeled off from the prepared foam-containing pressure-sensitive adhesive layer to expose a pressure-sensitive adhesive face. On the other hand, the second PET film (separator) was detached from the laminate prepared in step 3, Example 1 to expose the acrylic-urethane composite film surface and a foam-containing pressure-sensitive adhesive layer was adhered thereto. Lastly, the preliminary support on the fluoroethylene vinyl ether alternating copolymer layer was detached to give a protection film for blades. The double-faced pressure-sensitive adhesive tape used was superior in heat resistance and water resistance, and had a high adhesion strength. The protection film for blades used in Example 4 had an about 10 µm-thick fluorine coat layer formed on one surface of the acrylic-urethane composite film and a foam-containing pressure-sensitive adhesive layer on the other surface.

**Table 1**

| | Example 1 | Example 2 | Example 3 | Example 4 |
|---|---|---|---|---|
| weather resistance (appearance) | OK | OK | OK | OK |
| resistance to dirt adhesion | OK | OK | OK | OK |

As shown in Table 1, the films of Examples 1 - 4 showed good weather resistance. They can exhibit a dirt adhesion-preventing effect by the presence of the dirt-preventing layer on the surface, and are effective for preventing deterioration of blades when used as a protection film for the blades of wind power generators.

### INDUSTRIAL APPLICABILITY

The protection film for blades of wind power generators of the present invention can be used for the exterior surfaces of vehicles (automobile, train, airplane and the like) required to have weather resistance, in addition to the protection of blades.

## Claims

1. A protection film for a blade of a wind power generator, comprising a substrate and a pressure-sensitive adhesive layer on one surface of the substrate, which is used by adhering onto a blade surface.

2. The protection film according to claim 1, wherein the substrate is a weather-resistant film.

3. The protection film according to claim 2, wherein the weather-resistant film is selected from the group consisting of a polyolefin based film, a polyester based film, a urethane based polymer film, a composite film comprising an acrylic polymer and a urethane polymer, and a fluorine based film.

4. The protection film according to any one of claims 1 to 3, wherein a pressure-sensitive adhesive constituting the pressure-sensitive adhesive layer is an acrylic pressure-sensitive adhesive.

5. The protection film according to any one of claims 1 to 4, wherein the pressure-sensitive adhesive layer is a foam-containing pressure-sensitive adhesive layer.

6. A method of protecting a blade of a wind power generator, comprising adhering the protection film according to any one of claims 1 to 5 onto a blade surface.

7. A blade for a wind power generator, having a surface covered with a protection film.

8. The blade according to claim 7, wherein the protection film comprises a substrate comprised of a weather resistant film, and a pressure-sensitive adhesive layer formed on one surface of the substrate.

9. The blade according to claim 8, wherein the pressure-sensitive adhesive layer is comprised of an acrylic pressure-sensitive adhesive.

10. The blade according to claim 8 or 9, wherein the pressure-sensitive adhesive layer is a foam-containing pressure-sensitive adhesive layer.

11. A wind power generator, having the blade according to any one of claims 7 to 10.
